(19) Europäisches Patentamt
European Patent Office
Office européen des brevets

(11) **EP 0 968 037 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(21) Anmeldenummer: **98916924.8**

(22) Anmeldetag: **12.03.1998**

(51) Int Cl.⁷: **B01D 15/00**, B01D 63/10, B01J 20/28

(86) Internationale Anmeldenummer:
**PCT/EP98/01426**

(87) Internationale Veröffentlichungsnummer:
**WO 98/041301 (24.09.1998 Gazette 1998/38)**

(54) **VORRICHTUNG FÜR DIE BEHANDLUNG VON FLÜSSIGKEITEN**

FLUID-TREATMENT DEVICE

DISPOSITIF POUR LE TRAITEMENT DE LIQUIDES

(84) Benannte Vertragsstaaten:
**DE FR GB**

(30) Priorität: **18.03.1997 DE 19711186**

(43) Veröffentlichungstag der Anmeldung:
**05.01.2000 Patentblatt 2000/01**

(73) Patentinhaber: **SARTORIUS AG**
**37075 Göttingen (DE)**

(72) Erfinder: **NUSSBAUMER, Dietmar**
**D-37079 Göttingen (DE)**

(74) Vertreter: **Müller-Boré & Partner Patentanwälte**
**Grafinger Strasse 2**
**81671 München (DE)**

(56) Entgegenhaltungen:
**US-A- 4 248 736**          **US-A- 4 303 530**
**US-A- 4 986 909**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft eineVorrichtung für die Behandlung von Flüssigkeiten, wobei die Flüssigkeiten ein poröses Bahnmaterial durchströmen.

Die Art des porösen Bahnmaterials ist abhängig davon, welcher Behandlung die Flüssigkeit unterzogen werden soll. Dabei kann es sich entweder um einen Filtrationprozeß handeln, beispielsweise zur Entfernung von Partikeln, einen Adsorptionsprozeß, bei dem bestimmte Komponenten der Flüssigkeit durch Adsorption an dem Bahnmaterial entzogen werden, oder einen katalytischen Prozeß, bei dem eine oder mehrere Komponenten der Flüssigkeit durch Kontakt mit dem porösen Bahnmaterial zu bestimmten chemischen oder physikalischen Umsetzungen veranlaßt werden.

Geeignete poröse Bahnmaterialien sind mikroporöse Membranen im Porengrößenbereich 0,05 - 15 µm oder Faservliese. Wenn die Flüssigkeit durch Filtration behandelt werden soll, werden inerte mikroporöse Membranen aus Polymeren, wie Celluloseacetat, regenerierter Cellulose, Polyamiden, Polysulfon, Polyethersulfon etc. oder Vliese aus Polymeren, wie Polyester, Polypropylen, Cellulosefasern etc. eingesetzt. Im Falle der Adsorption werden Adsorptionsmembranen verwendet. Unter Adsorptionsmembranen werden Membranen verstanden, die an ihrer inneren und äußeren Oberfläche funktionelle Gruppen. Liganden oder Reaktanden tragen, die zur Wechselwirkung mit mindestens einem Stoff einer mit ihr in Kontakt stehenden flüssigen Phase befähigt sind. Die Bezeichnung Adsorptionsmembran ist als Oberbegriff für verschiedene Arten von Adsorptionsmembranen zu verstehen, wie Kationen-, Anionen-, Liganden-, Affinitätsoder aktivierten Membranen, die ihrerseits wieder je nach den funktionellen Gruppen, Liganden oder Reaktanden in unterschiedliche Adsorptionsmembran-Typen eingeteilt werden. Bei den katalytischen Prozessen handelt es sich vorzugsweise um enzymatische Umsetzungen, wobei an dem porösen Bahnmaterial immobilisierte Enzyme befinden. Es sind aber beispielsweise auch säure- oder basenkatalysierte Umsetzungen möglich unter Verwendung von stark sauren oder stark basischen Membranionenaustauschern in der H- bzw. OH-Form.

Das poröse Bahnmaterial kann sowohl einlagig als auch mehrlagig eingesetzt werden. Es kann mehrlagig zu einem Hohlzylinder mit einem inneren und einem äußeren Stützelement geformt sein, wobei die tangentialen Kanäle als Ringspalte ausgeführt sein können, oder in Form rechteckiger Zuschnitte, was für kleinere Disposables für den Labormaßstab bevorzugt wird. Die tangentialen Kanäle können auch eine tangential durchströmbares Stützgebilde enthalten, wie z.B. ein Gewebe. Die Vorrichtung kann auch mehrere poröse Bahnen und tangentiale Kanäle aufweisen, wobei jeweils ein Zufuhrkanal, in poröses Bahnmaterial und ein Abfuhrkanal abwechselnd angeordent sind. Letztere Anordnung wird vorzugsweise in der Weise realisiert, daß für die axiale Durchströmung zwei Bahnen des porösen Bahnmaterials mit zwei Bahnen des Stützgebildes gemeinsam um einen Kern gewickelt werden, das den Abfuhrkanal bildende Stützgebilde auf der Zuführseite mit den benachbaren porösen Bahnen flüssigkeitsdicht verbunden wird und das gleiche auf der Abfuhrseite mit dem den Zufuhrkanal bildenden Stützgebilde durchgeführt wird.

Vorrichtungen für die Behandlung von Flüssigkeiten, bei denen die Flüssigkeiten unter einem Überdruck über einen am Ende geschlossenen, tangentialen Kanal einem flächigen, porösen Bahnmaterial zugeführt werden, dieses durchtreten, und durch einen weiteren tangentialen Kanal abgeführt werden, der eine Öffnung am anderen Ende der Vorrichtung aufweist, sind bekannt.

Nachteilig ist, daß die bekannten Vorrichtungen der genannten Art ein unnötig großes Totvolumen aufweisen oder der angewandte Betriebsdruck nur teilweise für die Permeation des Bahnmaterials ausgenutzt wird, was begleitet ist von über die Kanallänge unterschiedlichen permeationswirksamen Druckdifferenzen.

Ein großes Totvolumen ist u. a. von Nachteil, weil es die Herstellkosten der Vorrichtung erhöht. Der Nachteil einer unvollständigen Nutzung des Betriebsdrucks bedarf keiner näheren Erläuterung. Lokal unterschiedliche permeationswirksame Druckdifferenzen haben im Falle der Filtration den Nachteil, daß im Bereich höherer Druckdifferenzen raschere Verblockung eintritt, bei der Adsorption und Katalyse darüber hinaus den des ungleichmäßigen Stoffdurchbruchs bzw. der ungleichmäßigen Stoffumsetzung.

US-A-4 248 736 offenbart ein Element einer Blutreinigungsvorrichtung, bei welcher das zu reinigende Blut in einen ersten (inneren) Ringspalt geführt wird, durch ein poröses Material tritt und durch einen zweiten (äußeren) Ringspalt abgeführt wird.

Die Erfindung hat sich deshalb zur Aufgabe gestellt, eine Vorrichtung für die Behandlung von Flüssigkeiten der eingangs genannten Art zur Verfügung zu stellen, die ein unnötig großes Totvolumen vermeidet und bei der der angewandte Betriebsdruck möglichst vollständig für die Permeation der Flüssigkeiten durch das poröse Bahnmaterial ausgenutzt wird.

Erfindungsgemäß wird eine Vorrichtung zur Behandlung von Flüssigkeiten vorgeschlagen, die ein Gehäuse umfaßt, das einen Flüssigkeitseinlaß und einen Flüssigkeitsauslaß aufweist, die durch ein quaderförmiges, poröses Bahnmaterial voneinander getrennt sind, wobei

- zwischen dem Einlaß und dem porösen Bahnmaterial ein an einem Ende geschlossener, quaderförmiger tangentialer Zufuhrkanal für Flüssigkeit und

- zwischen dem Auslaß und dem porösen Bahnmaterial ein an einem Ende geschlossener, tangentialer quaderförmiger Abfuhrkanal für Flüssigkeit ausgebildet ist,
- der Zufuhr- und Abfuhrkanal, welche jeweils mit durchströmbaren quaderförmigen Stützgebilden ausgefüllt sind, jeweils eine Kanallänge L, eine vorbestimmte Breite $b_k$ und eine vorbestimmte Höhe $h_k$ aufweisen,
- das poröse Bahnmaterial die Kanallänge L, die Breite $b_k$ und eine vorbestimmte Höhe $h_m$ aufweist, und
- die Kanallänge L einen derartigen Wert hat, daß ein dimensionsloser Widerstandsparameter A = $L \cdot (R_k/2R_m)^{1/2}$ in einem Bereich von 0,08 bis 0,8 liegt,

wobei $R_k = \Delta P \cdot b_k/Q_k \cdot s$ den hydraulischen Kanalwiderstand einer quaderförmigen Probe des Stützgebildes der Breite $b_k$, einer Länge s und der Höhe $h_k$ und

$R_m = \Delta P \cdot b_k \cdot S/Q_m$ den hydraulischen Kanalwiderstand einer quaderförmigen Probe des Bahnmaterials der Breite $b_k$, der Länge s und der Höhe $h_m$ bezeichnet,

$Q_k$ die Menge einer strömenden Flüssigkeit der Viskosität 1 cP ist, die pro Minute durch die Probe des Stützgebildes in deren Längenrichtung fließt, wenn die Druckdifferenz $\Delta P$ zwischen ihrer strömungsaufwärtsseitigen und strömungsabwärtsseitigen Stirnfläche angelegt wird, und

$Q_m$ die Menge einer strömenden Flüssigkeit der Viskosität 1 cP ist, die pro Minute durch die Probe des Bahnmaterials senkrecht zu deren Längen- und Breitenrichtung fließt, wenn die Druckdifferenz $\Delta P$ zwischen ihrer strömungsaufwärtsseitigen und strömungsabwärtsseitigen Fläche angelegt wird.

Ferner schlägt die Erfindung ein Verfahren zur Dimensionierung einer Vorrichtung zur Behandlung von Flüssigkeiten vor, die ein Gehäuse umfaßt, das einen Flüssigkeitseinlaß und einen gegenüberliegenden Flüssigkeitsauslaß aufweist, die durch ein quaderförmiges, poröses Bahnmaterial voneinander getrennt sind, wobei

- zwischen dem Einlaß und dem porösen Bahnmaterial ein an einem Ende geschlossener, quaderförmiger tangentialer Zufuhrkanal für Flüssigkeit und
- zwischen dem Auslaß und dem porösen Bahnmaterial ein an einem Ende geschlossener, tangentialer quaderförmiger Abfuhrkanal für Flüssigkeit ausgebildet ist;
- der Zufuhr- und Abfuhrkanal, welche jeweils mit durchströmbaren quaderförmigen Stützgebilden ausgefüllt sind, jeweils eine Kanallänge L, eine vorbestimmte Breite $b_k$ und eine vorbestimmte Höhe $h_k$ aufweisen;
- das poröse Bahnmaterial die Kanallänge L, die Breite $b_k$ und eine vorbestimmte Höhe $h_m$ aufweist;

wobei das Verfahren die folgenden Schritte umfaßt:

- Bereitstellen einer quaderförmigen Probe des Stützgebildes mit der Breite $b_k$, einer Länge s und der Höhe $h_k$;
- Messen einer Menge einer strömenden Flüssigkeit $Q_k$ mit einer Viskosität 1 cP, die pro Minute durch die Probe des Stützgebildes in deren Längenrichtung fließt, wenn eine Druckdifferenz $\Delta P$ zwischen ihrer strömungsaufwärtsseitigen und strömungsabwärtsseitigen Stirnfläche angelegt wird;
- Berechnen eines hydraulischen Kanalwiderstands des Stützgebildes $R_k = \Delta P \cdot b_k/Q_k \cdot S$;
- Bereitstellen einer quaderförmigen Probe des Bahnmaterials mit der Breite $b_k$, der Länge s und der Höhe $h_m$;
- Messen einer Menge einer strömenden Flüssigkeit $Q_m$ mit einer Viskosität 1 cP, die pro Minute durch die Probe des Bahnmaterials senkrecht zu deren Längen- und Breitenrichtung fließt, wenn eine Druckdifferenz $\Delta P$ zwischen ihrer strömungsaufwärtsseitigen und strömungsabwärtsseitigen Fläche angelegt wird;
- Berechnen eines hydraulischen Kanalwiderstands des Bahnmaterials $R_m = \Delta P \cdot b_k \cdot S/Q_m$; und
- Bestimmen der Kanallänge L des Zufuhr- und Abfuhrkanals und des porösen Bahnmaterials, so daß ein dimensionsloser Widerstandsparameter A= $L \cdot (R_k/2R_m)^{1/2}$ in einem Bereich von 0,08 bis 0,8 liegt.

Demgemäß wurde die Aufgabe dadurch gelöst, daß die hydraulische Permeabilität der tangentialen Kanäle mit der hydraulischen Permeabilität des porösen Bahnmaterials abgestimmt wird, wodurch im Betrieb über die gesamte Kanallänge eine zwischen Zufuhr- und Abfuhrkanal weitgehend konstante Druckdifferenz herrscht. Überraschenderweise wurde gefunden, daß die Dimensionierung der tangentialen Kanäle ohne einen aufwendigen, empirischen Optimierungsprozeß für einen bestimmten Anwendungsfall konzipiert werden kann.

Die Erfindung wurde möglich und überhaupt erst handhabbar, weil überraschenderweise festgestellt wurde, daß die komplizierten hydrodynamischen Gegebenheiten des Systems mit hinreichender Genauigkeit auf der Basis vereinfachender Annahmen mathematisch behandelt werden kann, und die relevanten Größen nach Gesichtspunkten der Ähnlichkeitslehre aus einem System von Beziehungen, bei denen es sich im wesentlichen um Verknüpfungen von Hyperbelfunktionen mit einer einzigen dimensionslosen Größe als Variabler handelt, dimensioniert werden können.

Die vereinfachenden Annahmen sind:

die strömende Flüssigkeitsmenge sowohl in den Kanälen als auch in dem porösen Bahnmaterial ist linear abhängig von der lokal wirksamen Druckdifferenz

tangentiale Strömungen im mikroporösen Bahnmaterial sind vernachlässigbar Zufuhrkanal und Permeatkanal sind hydraulisch identisch (gleicher Widerstand, gleiches Volumen).

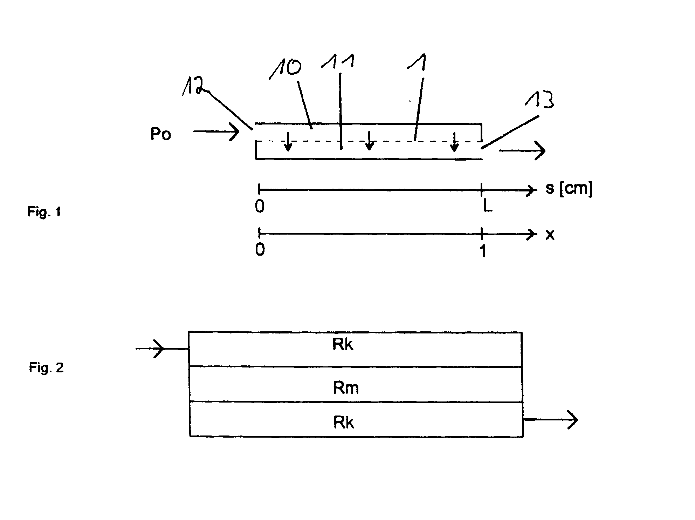

Die erstgenannte Annahme läßt sich durch ein elektrisches Ersatzschaltbild (s. Fig. 2) verdeutlichen, bei dem die linearen Abhängigkeiten ihre Entsprechung im Ohm schen Gesetz finden.

Es wird definiert:

Q = lokale strömende Flüssigkeitsmenge [$cm^3$/min]

$b_k$ = Kanalbreite [cm]

s = Weg im Kanal [cm]

$P_u(s)$ = lokaler Druck im Zufuhrkanal [bar]

$P_f(s)$ = lokaler Druck im Permeatkanal [bar]

$P_o$ = Eingangsdruck [bar]

L = Kanallänge [cm]

$R_k$ = Hydraulischer Kanalwiderstand [bar min/$cm^3$]

$$R_k = -\frac{\Delta P \cdot b_k}{Q \cdot s}$$

Der hydraulische Kanalwiderstand $R_k$ eines Stützgebildes kann experimentell mit Hilfe obiger Beziehung bestimmt werden, indem eine Probe der Breite $b_k$ und der Länge s zwischen 2 Platten und an den Rändern abgedichtet tangential mit einer Flüssigkeit der Viskosität 1 cP durchströmt wird.

$R_m$ = Hydraulischer Widerstand des mikroporösen Bahnmaterials [bar min/cm]

$$R_m = \frac{\Delta P \cdot b_k \cdot s}{Q}$$

Abnahme der Flüssigkeitsmenge im Überströmkanal:

$$\frac{d}{ds} Q = \frac{P_u - P_f}{R_m} \cdot b_k$$

Es ergibt sich die Differentialgleichung

$$\frac{d^2}{d s^2} P_u = \frac{P_u - P_f}{R_m} \cdot R_k$$

Es werden dimensionslose Größen eingeführt:

Druckparameter im Zufuhrkanal

$$y_u = \frac{P_u}{P_o}$$

Druckparameter im Permeatkanal

$$y_f = \frac{P_f}{P_o}$$

Ortsparameter

$$x = \frac{s}{L}$$

Widerstandsparameter

$$A = L \cdot \sqrt{\frac{R_k}{2 \cdot R_m}}$$

Als dimensionslose Form der Differentialgleichung ergibt sich:

$$\frac{d^2}{dx^2} y_u = 2 \cdot A^2 \cdot (y_u - y_f)$$

Es gelten die Randbedingungen:
Eingangsdruck:

$$y_u(0) = 1$$

Freier Auslauf:

$$y_f(1) = 0$$

Keine Strömung am Anfang des Filtratkanals:

$$\frac{d}{dx} y_f(0) = 0$$

Keine Strömung am Ende des Permeatkanals

$$\frac{d}{dx} y_u(1) = 0$$

Nach Lösung der Differentialgleichung und Koeffizientenvergleich ergibt sich unter Berücksichtigung der Randbedingungen:

für den lokalen Druckparameter $y_u$ im Zufuhrkanal:

$$y_u(A,x) = \frac{\cosh(A) + 2 \cdot A \cdot (1 - x) \cdot \sinh(A) + \cosh(A \cdot (1 - 2 \cdot x))}{2 \cdot (\cosh(A) + A \cdot \sinh(A))}$$

für den lokalen Druckparameter $y_f$ im Permeatkanal:

$$y_f(A,x)= \frac{\cosh(A) + 2 \cdot A \cdot (1-x) \cdot \sinh(A) - \cosh(A \cdot (1-2 \cdot x))}{2 \cdot \cosh(A) + 2 \cdot A \cdot \sinh(A)}$$

für die dimensionslose lokale Druckdifferenz $\Delta y$:

$$\Delta y(A,x)= y_u(A,x) - y_f(A,x) \qquad \Delta y(A,x)= \frac{\cosh(A \cdot (1-2x))}{\cosh(A) + A \cdot \sinh(A)}$$

und nach Integration der dimensionslosen lokalen Druckdifferenz über die Kanallänge für die mittlere dimensionslose Druckdifferenz $\Delta y_m$:

$$\Delta y_m(A)= \frac{\sinh(A)}{A \cdot (\cosh(A)+A \cdot \sinh(A))}$$

Die relative lokale Druckdifferenz $\Delta y_{rel}$ ist:

$$\Delta y_{rel}(A,x)= \frac{\Delta y(A,x)}{\Delta y_m(A)} \qquad \Delta y_{rel}(A,x)= A \frac{\cosh(A \cdot (1-2x))}{\sinh(A)}$$

Bei der Stofftrennung durch Adsorption findet der Durchbruch der Zielsubstanz zuerst an den Stellen der maximalen Druckdifferenz statt, also am Anfang und am Ende des Kanals, und er endet an der Stelle der minimalen Druckdifferenz, also in der Mitte des Kanals. Es läßt sich zeigen, daß der Durchbruchsbeginn $V_b$ und das Durchbruchsende $V_e$, ausgedrückt in Teilen bzw. Vielfachen des Volumens, bei dem der Durchbruch bei gleichmäßiger Druckverteilung erfolgen würde, folgende Abhängigkeiten von A aufweist:

$$v_b(A) = \frac{\tanh(A)}{A} \qquad v_e(A) = \frac{\sinh(A)}{A}$$

Wenn ein Kanal mit einem bestimmten Wert von $R_k$ bei gleichem porösem Bahnmaterial mit einem bestimmten Wert $R_m$ verlängert wird, steigt die Permeationsleistung bei gegebenem Eindgangsdruck infolge der zunehmenden Fläche zunächst an. Das ist aber nur bis zu einer bestimmten Grenze möglich, wie schon unmittelbar aus der Überlegung hervorgeht, daß die Permeationsleistung bei der Länge unendlich 0 sein muß. Es läßt sich zeigen, daß der Widerserstandsparameter bei der maximalen Permeationsleistung des Kanals einen bestimmten Wert $A_{max}$ aufweist:

$$A_{max}=\text{acoth}(\sqrt{2})=0.881$$

Unter relativer Filtrationsgeschwindigkeit $F_{rel}$ wird das Verhältnis der Permeationsleistung eines Kanals einer bestimmten Länge zu der bei gleichen Werten von $R_k$ und $R_m$ maximal erreichbaren verstanden. Sie läßt sich als Funktion von A ausdrücken:

$$F_{rel}(A) = \frac{(A_{max} + \sqrt{2}) \cdot \sinh(A)}{A \cdot \sinh(A) + \cosh(A)}$$

Bei der Adsorption wird eine ideale Durchbruchkurve der Zielsubstanz, also eine solche mit spontanem Durchbruch, mit steigenden Werten von A verzerrten und zwar nach folgender Beziehung, in der v das Permeatvolumen geteilt durch das zur vollständigen Beladung des Adsorbers mit Zielsubstanz erforderliche ist und c die Konzentration an Zielsubstanz im Permeat geteilt durch die Eingangskonzentration:

$$c(\Lambda,v)= \left[ 1 - \left(v \leq v_e(A)\right) \cdot \sqrt{\frac{1}{A^2 \cdot v^2} - \frac{1}{\sinh(A)^2}} \right]$$

Bei einer bevorzugten Ausführungsform handelt es sich um eine Vorrichtung zur Durchführung von adsorptiven Stofftrennungen mittels Permeation von Flüssigkeiten durch poröse Adsorptionsmembranen. Die Vorrichtung ist dadurch gekennzeichnet, daß ein wickelartig ausgebildetes Adsorbermodul einen Hohlzylinder aus mehr als einer Windung der Adsorptionsmembranen darstellt und zwischen seiner Innenfläche und einem zylindrischen Kern und zwischen seiner Außenfläche und einem Mantelrohr ein innerer und ein äußerer Ringspalt ausgebildet ist.

Im Falle von Hohlzylindern werden die Ringspalten vorzugsweise so dimensioniert, daß der innere und der äußere Ringspalt das gleiche Volumen haben. Für den äußeren Ringspalt ergibt sich für den Widerstandsparameter A unter Anwendung des Hagen-Poiseuille'schen Gesetzes:

$$A = L \cdot \sqrt{\dfrac{8 \cdot D \cdot d}{\left[(R_2 + k)^2 - R_2^2\right]\left[(R_2+k)^2 + R_2^2 - \dfrac{(R_2+k)^2 - R_2^2}{\ln\left(\dfrac{R_2+k}{R_2}\right)}\right]\cdot \ln\left(\dfrac{R_2}{R_1}\right)}}$$

Es bedeuten:

$R_1$ = Innenradius des Adsorber - Hohlzylinders [cm]
$R_2$ = Außenradius des Adsorber - Hohlzylinders [cm]
k = Breite des äußeren Ringspalts [cm]
L = Länge des Adsorber - Hohlzylinders [cm]
D = Spezifische Durchflußleistung der Einzelmembrane [cm cP/min bar]
d = Dicke der Einzelmembrane [cm]

Die Berechnungen werden an folgenden Beispielen verdeutlicht, denen praktische Zahlenwerte der beispielhaft genannten erfindungsgemäßen Ausführungsformen zugrunde liegen (das Beispiel mit nur einer Windung illustriert den nachteiligen Einfluß zu eng dimensionierter Kanäle):

L = 100 cm     $R_2$ = 48 mm     k = 2 mm     D = 150 $cm^3/cm^2$ min bar     d = 300 $\mu$m

| Windungszahl | $R_1$ [mm] | A | $\Delta y_m$ | $v_b$ |
|---|---|---|---|---|
| 1 | 47.7 | 0,425 | 0,806 | 0,944 |
| 14 | 43,8 | 0,112 | 0,984 | 0,996 |
| 29 | 39,2 | 0,058 | 0,996 | 0,999 |
| 67 | 27,9 | 0,024 | 0,999 | 1 |

Es handelt sich bei diesem Beispiel um die Dimensionierung eines erfindungsgemäßen Membranadsorbermoduls für große Baulängen, wobei solche mit verschiedenen Windungszahlen in einem gemeinsamen Mantelrohr untergebracht werden können. Die Widerstandsparameter zeigen, daß die Adsorberlänge in dem Beispiel mit 29 Windungen theoretisch ohne Einbußen an Durchflußleistung und Bindungskapazität auch 2 m gewählt werden kann und bei 67 Windungen 4 m.

Bei Zugrundelegung der gleichen Kanaldimensionen auf eine Modullänge von 10 cm reduzieren sich die Werte von A auf ein Zehntel der in obiger Tabelle angegebenen Werte und das Totvolumen beträgt in jedem Fall 123 ml. Werden für die gleichen Membranflächen die Dimensionen so angepaßt, daß die Widerstandsparameter etwa den Wert 0,1 haben, ergeben sich, ohne Einbußen an Durchflußleistung und Bindungskapazität, folgende reduzierte Totvolumina:

| Windungszahl | $R_2$ [mm] | k [mm] | $R_1$ [mm] | A | Totvolumen [ml] |
|---|---|---|---|---|---|
| 1 | 48,8 | 1,2 | 48,5 | 0,092 | 74,5 |
| 13 | 49,6 | 0,45 | 45,5 | 0,108 | 28,1 |
| 28 | 49,6 | 0,35 | 41,2 | 0,106 | 21,9 |
| 63 | 49,7 | 0,3 | 30,7 | 0,083 | 18,8 |

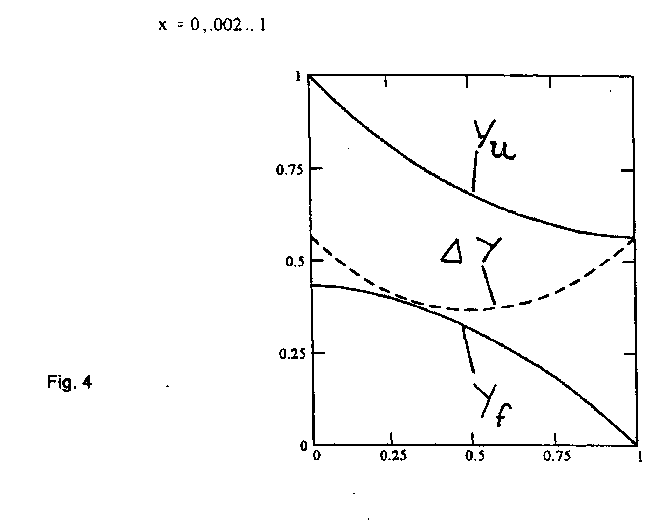

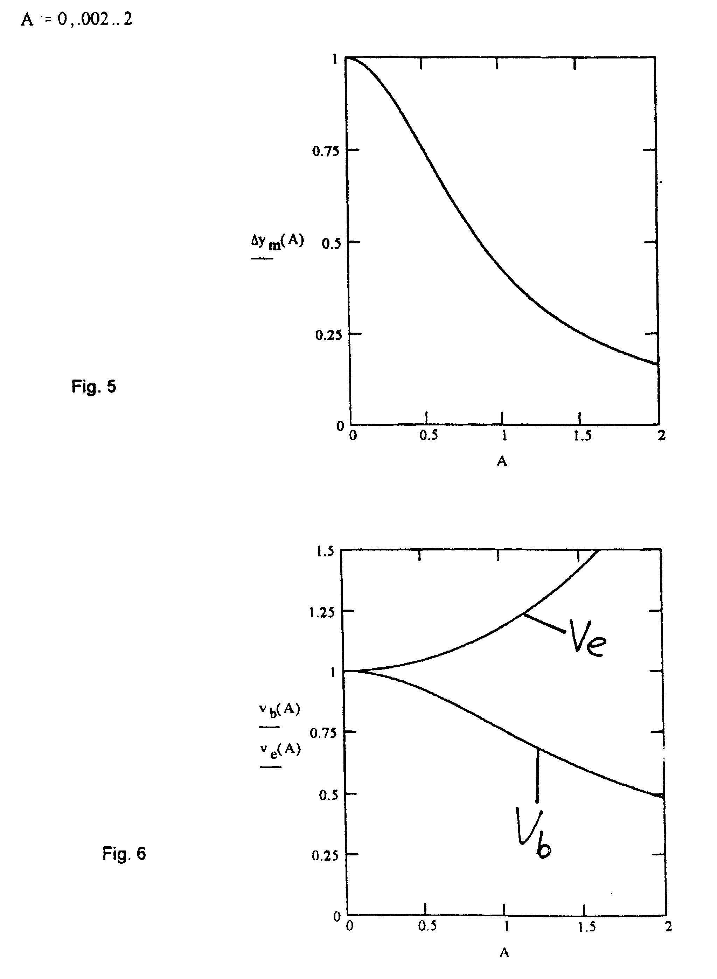

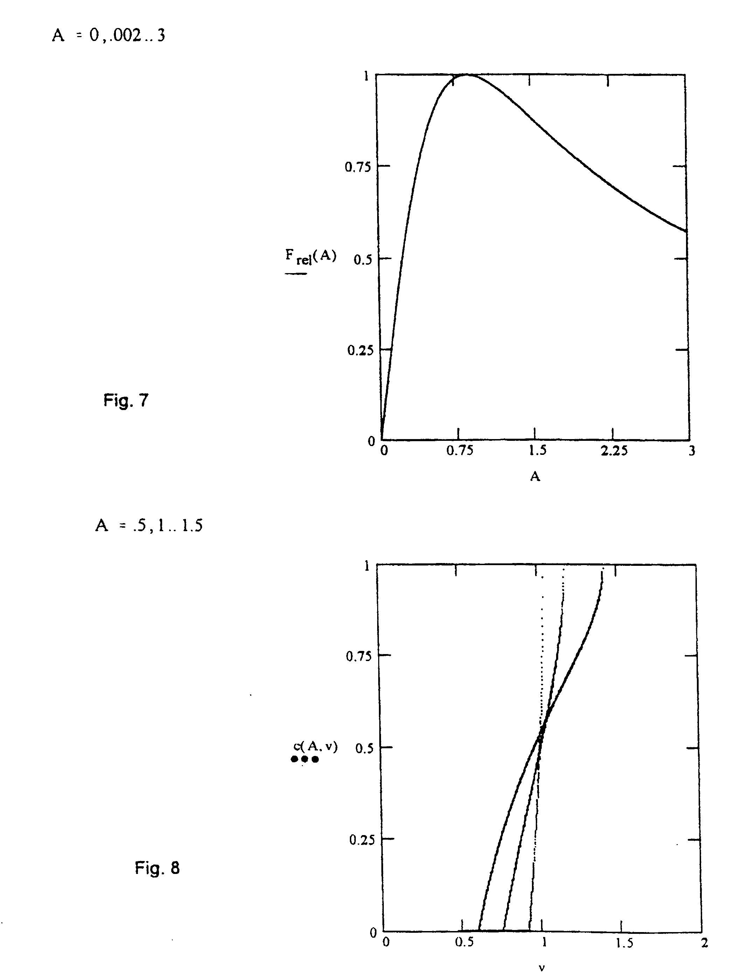

Die Figuren 1 bis 8 sollen die Erfindung näher erläutern

Dabei zeigen

Fig. 1    eine Prinzipskizze,

Fig. 2    ein Elektrisches Ersatzschaltbild,

Fig. 3    eine bevorzugte Ausführungsform der Erfindung,

Fig. 4    die Druckparameter $y_u$ im Zufuhrkanal und $y_f$ im Abflußkanal und die dimensionlose lokale Druckdifferenz $\Delta y$ in Abhängigkeit vom Ortsparameter x bei A = 1,

Fig. 5    $\Delta y_m$ in Abhängigkeit von A,

Fig. 6    den Durchbruchsbeginn $v_b$ und das Durchbruchsende $v_e$ in Abhängigkeit von A,

Fig. 7    die relative Filtrationsgeschwindigkeit $F_{rel}$ in Abhängigkeit von A und

Fig. 8    die Durchbruchskurven bei verschiedenen Werten von A.

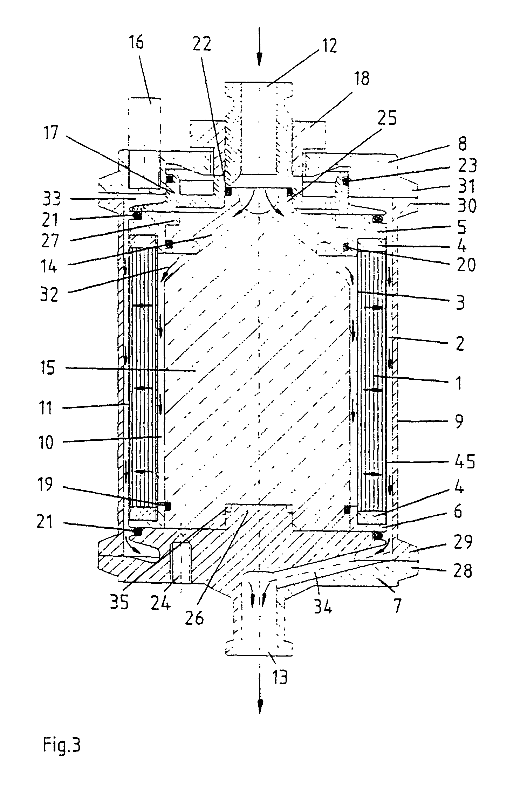

Der prinzipielle Aufbau einer erfindungsgemäßen Vorrichtung gemäß Figur 1 weist mindestens eine Lage eines flächigen porösen Bahnmaterials **1** auf, die einen Zufuhrkanal **10** für Flüssigkeit von einem Abfuhrkanal **11** für Flüssigkeit voneinander trennt, wobei beide tangentialen Kanäle an dem einen Ende geschlossen sind, während sie an dem anderen gegenüberliegenden Ende einen Einlaß **12** und einen Auslaß **13** haben. Die flächigen porösen Bahnmaterialien bestehen aus rechteckigen Zuschnitten.
Bei einer bevorzugten Ausführungsform gemäß Figur 3 handelt es sich um eine Vorrichtung, die dadurch gekennzeichnet ist, daß ein wickelartig ausgebildetes Adsorbermodul **45** einen Hohlzylinder aus mehr als einer Windung der Adsorptionsmembranen **1** darstellt und zwischen seiner Innenfläche und einem zylindrischen Kern **15** und zwischen seiner Außenfläche und einem Mantelrohr **9** ein innerer **10** und ein äußerer **11** Ringspalt ausgebildet ist. Dabei entsprechen die Ringspalte den tangentialen Kanälen nach Figur 1.

**Patentansprüche**

**1.**    Vorrichtung zur Behandlung von Flüssigkeiten, die ein Gehäuse umfaßt, das einen Flüssigkeitseinlaß und einen Flüssigkeitsauslaß aufweist, die durch ein quaderförmiges, poröses Bahnmaterial voneinander getrennt sind, wobei

-    zwischen dem Einlaß und dem porösen Bahnmaterial ein an einem Ende geschlossener, quaderförmiger tangentialer Zufuhrkanal für Flüssigkeit und
-    zwischen dem Auslaß und dem porösen Bahnmaterial ein an einem Ende geschlossener, tangentialer quaderförmiger Abfuhrkanal für Flüssigkeit ausgebildet ist,
-    der Zufuhr- und Abfuhrkanal, welche jeweils mit durchströmbaren quaderförmigen Stützgebilden ausgefüllt sind, jeweils eine Kanallänge L, eine vorbestimmte Breite $b_k$ und eine vorbestimmte Höhe $h_k$ aufweisen,
-    das poröse Bahnmaterial die Kanallänge L, die Breite $b_k$ und eine vorbestimmte Höhe $h_m$ aufweist, und
-    die Kanallänge L einen derartigen Wert hat, daß ein dimensionsloser Widerstandsparameter $A=L\cdot(R_k/2R_m)^{1/2}$ in einem Bereich von 0,08 - bis 0,8 liegt,

wobei $R_k=\Delta P\cdot b_k/Q_k\cdot s$ den hydraulischen Kanalwiderstand einer quaderförmigen Probe des Stützgebildes der Breite $b_k$, einer Länge s und der Höhe $h_k$ und
$R_m =\Delta P\cdot b_k\cdot s/Q_m$ den hydraulischen Kanalwiderstand einer quaderförmigen Probe des Bahnmaterials der Breite $b_k$, der Länge s und der Höhe $h_m$ bezeichnet,
$Q_k$ die Menge einer strömenden Flüssigkeit der Viskosität 1 cP ist, die pro Minute durch die Probe des Stützgebildes in deren Längenrichtung fließt, wenn die Druckdifferenz $\Delta P$ zwischen ihrer strömungsaufwärtsseitigen und strömungsabwärtsseitigen Stirnfläche angelegt wird; und
$Q_m$ die Menge einer strömenden Flüssigkeit der Viskosität 1 cP ist, die pro Minute durch die Probe des Bahnmaterials senkrecht zu deren Längenund Breitenrichtung fließt, wenn die Druckdifferenz $\Delta P$ zwischen ihrer strömungs-

aufwärtsseitigen und strömungsabwärtsseitigen Fläche angelegt wird.

**2.** Vorrichtung nach Anspruch 1, wobei der dimensionslose Widerstandsparameter A in einem Bereich von 0,1 bis 0,2 liegt.

**3.** Vorrichtung nach Anspruch 1, wobei der Zufuhr- und der Abfuhrkanal das gleiche Volumen besitzen.

**4.** Vorrichtung nach Anspruch 1, wobei das poröse Bahnmaterial zumindest eine Lage eines flächigen Bahnmaterial umfaßt.

**5.** Verfahren zur Dimensionierung einer Vorrichtung zur Behandlung von Flüssigkeiten, die ein Gehäuse umfaßt, das einen Flüssigkeitseinlaß und einen gegenüberliegenden Flüssigkeitsauslaß aufweist, die durch ein quaderförmiges, poröses Bahnmaterial voneinander getrennt sind, wobei

- zwischen dem Einlaß und dem porösen Bahnmaterial ein an einem Ende geschlossener, quaderförmiger tangentialer Zufuhrkanal für Flüssigkeit und
- zwischen dem Auslaß und dem porösen Bahnmaterial ein an einem Ende geschlossener, tangentialer quaderförmiger Abfuhrkanal für Flüssigkeit ausgebildet ist;
- der Zufuhr- und Abfuhrkanal, welche jeweils mit durchströmbaren quaderförmigen Stützgebilden ausgefüllt sind, jeweils eine Kanallänge L, eine vorbestimmte Breite $b_k$ und eine vorbestimmte Höhe $h_k$ aufweisen;
- das poröse Bahnmaterial die Kanallänge L, die Breite $b_k$ und eine vorbestimmte Höhe $h_m$ aufweist;

wobei das Verfahren die folgenden Schritte umfaßt:

- Bereitstellen einer quaderförmigen Probe des Stützgebildes mit der Breite $b_k$, einer Länge s und der Höhe $h_k$;
- Messen einer Menge einer strömenden Flüssigkeit $Q_k$ mit einer Viskosität 1 cP, die pro Minute durch die Probe des Stützgebildes in deren Längenrichtung fließt, wenn eine Druckdifferenz $\Delta P$ zwischen ihrer strömungsaufwärtsseitigen und strömungsabwärtsseitigen Stirnfläche angelegt wird;
- Berechnen eines hydraulischen Kanalwiderstands des Stützgebildes $R_k = \Delta P \cdot b_k / Q_k \cdot s$;
- Bereitstellen einer quaderförmigen Probe des Bahnmaterials mit der Breite $b_k$, der Länge s und der Höhe $h_m$;
- Messen einer Menge einer strömenden Flüssigkeit $Q_m$ mit einer Viskosität 1 cP, die pro Minute durch die Probe des Bahnmaterials senkrecht zu deren Längen- und Breitenrichtung fließt, wenn eine Druckdifferenz $\Delta P$ zwischen ihrer strömungsaufwärtsseitigen und strömungsabwärtsseitigen Fläche angelegt wird;
- Berechnen eines hydraulischen Kanalwiderstands des Bahnmaterials $R_m = \Delta P \cdot b_k \cdot s / Q_m$; und
- Bestimmen der Kanallänge L des Zufuhr- und Abfuhrkanals und des porösen Bahnmaterials, so daß ein dimensionsloser Widerstandsparameter $A = L \cdot (R_k / 2R_m)^{1/2}$ in einem Bereich von 0,08 bis 0,8 liegt.

**6.** Verfahren nach Anspruch 5, wobei der dimensionslose Widerstandsparameter in einem Bereich von 0,1 bis 0,2 liegt.

**Claims**

**1.** Device for treating liquids, which comprises a housing that has a liquid inlet and a liquid outlet, which are separated from one another by a cuboid porous web material, wherein

- a cuboid tangential feed channel for liquid, which is closed at one end, is formed between the inlet and the porous web material, and
- a tangential cuboid discharge channel for liquid, which is closed at one end, is formed between the outlet and the porous web material,
- the feed and discharge channels, which are respectively filled with cuboid support structures through which flow can take place, respectively have a channel length L, a predetermined width $b_k$ and a predetermined height $h_k$,
- the porous web material has the channel length L, the width $b_k$ and a predetermined height $h_m$, and
- the channel length L has a value such that a dimensionless resistance parameter $A = L \cdot (R_k / 2R_m)^{1/2}$ lies in a range of from 0.08 to 0.8,

where $R_k = \Delta P \cdot b_k / Q_k \cdot s$ denotes the hydraulic channel resistance of a cuboid sample of the support structure having the width $b_k$, a length s and the height $h_k$, and $R_m = \Delta P \cdot b_k \cdot s / Q_m$ denotes the hydraulic channel resistance of a cuboid sample of the web material having the width $b_k$, the length s and the height $h_m$, and

$Q_k$ is the quantity of a flowing liquid, having the viscosity 1 cP, which flows per minute through the sample of the support structure in its length direction when the pressure difference $\Delta P$ is applied between its upstream end face and its downstream end face, and

$Q_m$ is the quantity of a flowing liquid, having the viscosity 1 cP, which flows per minute through the sample of the web material, perpendicularly to its length and width directions, when the pressure difference $\Delta P$ is applied between its upstream face and its downstream face.

2. Device according to Claim 1, wherein the dimensionless resistance parameter A lies in a range of from 0.1 to 0.2.

3. Device according to Claim 1, wherein the feed channel and the discharge channel have the same volume.

4. Device according to Claim 1, wherein the porous web material comprises at least one layer of a flat web material.

5. Method for dimensioning a device for treating liquids, which comprises a housing that has a liquid inlet and an opposite liquid outlet, which are separated from one another by a cuboid porous web material, wherein

- a cuboid tangential feed channel for liquid, which is closed at one end, is formed between the inlet and the porous web material, and;
- a tangential cuboid discharge channel for liquid, which is closed at one end, is formed between the outlet and the porous web material;
- the feed and discharge channels, which are respectively filled with cuboid support structures through which flow can take place, respectively have a channel length L, a predetermined width $b_k$ and a predetermined height $h_k$;
- the porous web material has the channel length L, the width $b_k$ and a predetermined height $h_m$;

wherein the method comprises the following steps:

- preparing a cuboid sample of the support structure having the width $b_k$, a length s and the height $h_k$;
- measuring a quantity of a flowing liquid $Q_k$, having a viscosity of 1 cP, which flows per minute through the sample of the support structure in its length direction when a pressure difference $\Delta P$ is applied between its upstream end face and its downstream end face;
- calculating a hydraulic channel resistance of the support structure $R_k = \Delta P \cdot b_k / Q_k \cdot s$;
- preparing a cuboid sample of the web material having the width $b_k$, the length s and the height $h_m$;
- measuring a quantity of a flowing liquid $Q_m$, having a viscosity of 1 cP, which flows per minute through the sample of the web material, perpendicularly to its length and width directions, when a pressure difference $\Delta P$ is applied between its upstream face and its downstream face;
- calculating a hydraulic channel resistance of the web material $R_m = \Delta P \cdot b_k \cdot s / Q_m$; and
- determining the channel length L of the feed and discharge channels and of the porous web material so that a dimensionless resistance parameter $A = L \cdot (R_k / 2R_m)^{1/2}$ lies in a range of from 0.08 to 0.8.

6. Method according to Claim 5, wherein the dimensionless resistance parameter lies in a range of from 0.1 to 0.2.

**Revendications**

1. Dispositif de traitement de fluide, qui comprend un boîtier comportant une entrée de fluide et une sortie de fluide qui sont séparées l'une de l'autre par une matière en nappe, poreuse et de forme parallélépipédique, dans lequel

- un conduit d'alimentation en liquide, tangentiel et de forme parallélépipédique, fermé à une extrémité, est réalisé entre l'entrée et la matière en nappe poreuse et
- un conduit d'évacuation, tangentiel et de forme parallélépipédique, fermé à une extrémité, est réalisé entre la sortie et la matière en nappe poreuse,
- le conduit d'alimentation et le conduit d'évacuation, qui sont remplis chacun de structures de soutien, de forme parallélépipédique et pouvant être traversées par un écoulement, présentent chacun une longueur de conduit L, une largeur $b_k$ préfixée et une hauteur $h_k$ préfixée,

- la matière en nappe poreuse présente la longueur de conduit L, la largeur $b_k$ et une hauteur $h_m$ préfixée, et
- la longueur de conduit L a une valeur telle qu'un paramètre de résistance, sans dimension, $A = L. (R_k/2Rm)^{1/2}$ est située dans une fourchette de 0,08 à 0,8,

tandis que $R_k = \Delta P.b_k/Q_k.s$ désigne la résistance hydraulique de conduit d'un échantillon parallélépipédique de la structure de soutien de largeur $b_k$, d'une longueur s et de hauteur $h_k$ et

$R_m = \Delta P.b_k.s/Q_m$ désigne la résistance hydraulique de conduit d'un échantillon parallélépipédique de la matière en nappe de largeur $b_k$, de longueur s et de hauteur $h_m$,

$Q_k$ est le débit d'un fluide en écoulement de viscosité 1 cP qui s'écoule par minute à travers l'éprouvette de la structure de soutien suivant la direction longitudinale de celui-ci lorsque la différence de pression $\Delta P$ est appliquée entre sa surface frontale côté amont de l'écoulement et sa surface frontale côté aval de l'écoulement et

$Q_m$ est le débit d'un fluide en écoulement de viscosité 1 cP qui s'écoule par minute à travers l'échantillon de la matière en nappe perpendiculairement à la direction longitudinale et à la largeur de celui-ci lorsque la différence de pression $\Delta P$ est appliquée entre sa surface côté amont de l'écoulement et sa surface côté aval de l'écoulement.

2. Dispositif suivant la revendication 1, dans lequel le paramètre de résistance A sans dimension est situé dans une fourchette de 0,1 à 0,2.

3. Dispositif suivant la revendication 1, dans lequel le conduit d'alimentation et le conduit d'évacuation possèdent le même volume.

4. Dispositif suivant la revendication 1, dans lequel la matière en nappe poreuse comprend au moins une couche d'une matière en nappe s'étendant suivant deux dimensions.

5. Procédé de dimensionnement d'un dispositif de traitement de fluide, qui comprend un boîtier comportant une entrée de fluide et une sortie de fluide qui sont séparées l'une de l'autre par une matière en nappe, poreuse et de forme parallélépipédique, dans lequel

- un conduit d'alimentation en liquide, tangentiel et de forme parallélépipédique, fermé à une extrémité, est réalisé entre l'entrée et la matière en nappe poreuse et
- un conduit d'évacuation, tangentiel et de forme parallélépipédique, fermé à une extrémité, est réalisé entre la sortie et la matière en nappe poreuse,
- le conduit d'alimentation et le conduit d'évacuation, qui sont remplis chacun de structures de soutien, de forme parallélépipédique et pouvant être traversées par un écoulement, présentent chacun une longueur de conduit L, une largeur $b_k$ préfixée et une hauteur $h_k$ préfixée,
- la matière en nappe poreuse présente la longueur de conduit L, la largeur $b_k$ et une hauteur $h_m$ préfixée,

le procédé comportant les opérations suivantes consistant :

- à fournir un échantillon parallélépipédique de la structure de soutien ayant la largeur $b_k$, une longueur s et la hauteur $h_k$,
- à mesurer un débit $Q_k$ d'un fluide en écoulement ayant une viscosité 1 cP qui s'écoule par minute à travers l'éprouvette de la structure de soutien suivant la direction longitudinale de celui-ci lorsque la différence de pression $\Delta P$ est appliquée entre sa surface frontale côté amont de l'écoulement et sa surface frontale côté aval de l'écoulement
- à calculer une résistance hydraulique de conduit de la structure de soutien $R_k = \Delta P.b_k/Q_k.s$,
- à fournir un échantillon parallélépipédique de la matière en nappe ayant la largeur $b_k$, la longueur s et la hauteur $h_m$,
- à mesurer un débit $Q_m$ d'un fluide en écoulement ayant une viscosité 1 cP qui s'écoule par minute à travers l'échantillon de la matière en nappe perpendiculairement à la direction longitudinale et à la largeur de celui-ci lorsqu'une différence de pression $\Delta P$ est appliquée entre sa surface côté amont de l'écoulement et sa surface côté aval de l'écoulement.
- à calculer une résistance hydraulique de conduit de la matière en nappe $R_m = \Delta P.b_k.s/Q_m$ et
- à déterminer la longueur de conduit L du conduit d'alimentation et du conduit d'évacuation et de la matière en nappe poreuse de façon qu'un paramètre de résistance, sans dimension, $A = L. (R_k/2Rm)^{1/2}$ est située dans une fourchette de 0,08 à 0,8,

6. Dispositif suivant la revendication 5, selon lequel le paramètre de résistance sans dimension est situé dans une fourchette de 0,1 à 0,2.

Fig. 1

Fig. 2

Fig.3

$x = 0, .002 .. 1$

Fig. 4

$A := 0, .002 .. 2$

Fig. 5

Fig. 6

A = 0, .002 .. 3

Fig. 7

A = .5, 1 .. 1.5

Fig. 8